(19) Europäisches Patentamt

European Patent Office

Office européen des brevets

(11) **EP 1 615 092 A1**

(12) **EUROPEAN PATENT APPLICATION**
published in accordance with Art. 158(3) EPC

(43) Date of publication:
**11.01.2006 Bulletin 2006/02**

(51) Int Cl.:
*G05B 19/418* (1995.01)

(21) Application number: **04726290.2**

(22) Date of filing: **07.04.2004**

(86) International application number:
**PCT/JP2004/005049**

(87) International publication number:
**WO 2004/092855 (28.10.2004 Gazette 2004/44)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.04.2003 JP 2003110817**
**08.08.2003 JP 2003289982**

(71) Applicant: **NS Solutions Corporation**
**Tokyo 104-8280 (JP)**

(72) Inventor: **SHIRAYAMA, Takayuki,**
**c/o NS SOLUTIONS CORPORATION**
**Tokyo 104-8280 (JP)**

(74) Representative: **Vossius & Partner**
**Siebertstrasse 4**
**81675 München (DE)**

(54) **INFORMATION PROCESSING DEVICE, INFORMATION PROCESSING SYSTEM, INFORMATION PROCESSING METHOD AND RECORDING MEDIUM**

(57)     An order information database (22a) stores order information being information concerning a plurality of orders. A virtual actual article information database (22c) stores virtual actual article information being information concerning virtual actual articles created by combining a plurality of kinds of actual articles. A set creation processing unit (25) creates sets each combining a part of or all of a plurality of orders to be optimum for the virtual actual article based on order information referring to the order information database (22a), and the virtual actual article information referring to the virtual actual article information database (22c). An assignment processing unit (26) creates assignment information of assigning each of the sets created by the set creation processing unit (25) to the optimum actual article.

FIG. 1

**Description**

Technical Field

The present invention relates to an information processing apparatus, an information processing system, an information processing method and a recording medium of the same for searching a solution of efficient blanking layout of product coils (ordered products) from an actual article made of iron (base material) in, for example, iron- manufacturing industry.

Background Art

Conventionally, on production of an iron coil (hereinafter, referred to as a product coil) produced corresponding to an order, a certain actual article (ready-made iron coil to be cut out = base material) is divided into predetermined widths and lengths and cut out corresponding to the order. Here, the actual articles (parent coils) are iron coils having various widths, lengths and thicknesses. Efficient blank layout is designed to be performed by finding the optimum solutions of the allocation of the actual article to the product coils at this time, and the division and cutting (hereinafter, called blank layout) of the allocated actual article.

Specifically, there is the method of creating a set which is organized by combining a plurality of orders and is to be a virtual order and assigning this set to the actual article. More efficient blank layout is realized than when each order is assigned to the actual article by combining a plurality of orders to make a set. For example, the set is a virtual order which is the combination minimizing a remainder in a width direction by combining orders with a plurality of kinds of widths corresponding to the kind of the width of the actual article.

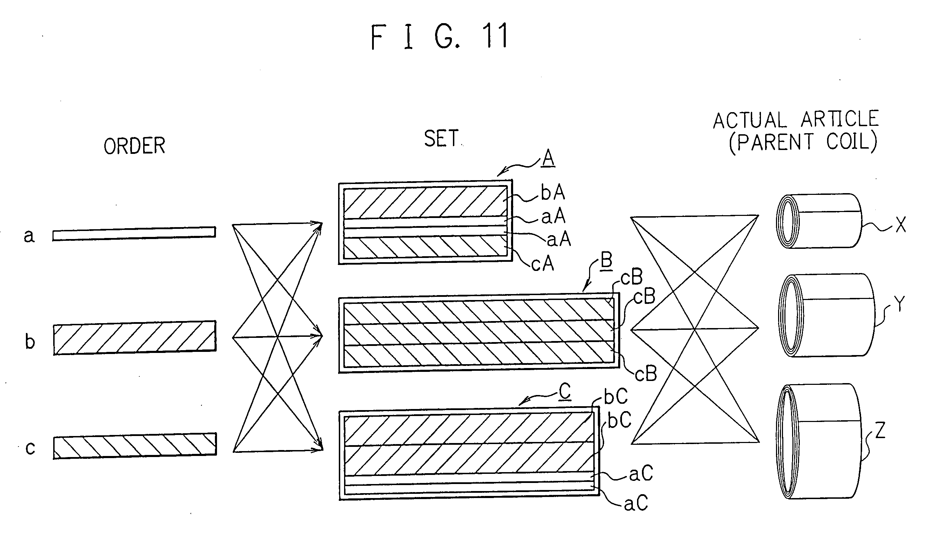

Here, the relationship among a plurality of orders, the set, and the actual article will be further explained by showing a concrete example. Fig. 11 is a view showing the relationship among a plurality of orders, the sets, and the actual articles (parent coils). It is assumed that there are orders a, b and c with different widths and lengths as shown in Fig. 11. In Fig. 11, the orders a, b and c show the difference in width, and the difference in length is not shown. A set A, a set B and a set C are created by using a part of or all of the orders a, b and c.

The set A in Fig. 11 is the set with the constitution including two lines of divided regions aA corresponding to the order a, one line of divided region bA corresponding to the order b, and one line of divided region cA corresponding to the order c. The set B is the set with the constitution including three lines of divided regions cB corresponding to the order c. The set C is the set with the constitution including two lines of divided regions aC corresponding to the order a, and two lines of divided regions bC corresponding to the order b. As shown above, the sets, which are the virtual orders to make it possible to perform efficient allocation of the actual articles by combining a plurality of orders, are created. Next, processing of assigning the sets A, B and C to the articles X, Y and Z is performed. According to the above, the processing of assigning the product coils corresponding to the orders a, b and c to the actual articles X, Y and Z is performed.

As the other methods for assigning the steel plate products (= blank layout method), there is the methods shown as follows. First, the steel pieces (product materials) are grouped with the characteristics such as component, quality, specifications, and plate thickness as the reference. Next, the ordered products are grouped with the same characteristics as those of the steel pieces as the reference. Next, the processing of assigning the ordered products to the steel pieces with the above-described characteristics as the reference by the unit of group is performed (for example, see Patent Document 1).

As the blank layout method to provide a product by cutting a steel board or steel tape, the method of determining the cutting position of the product based on the form information of the product and the defect portion information of the steel board or steel tape is disclosed (for example, see Patent Document 2).

As the method of creating the blank layout plan by appropriating one or more order or orders to each of a plurality of plate materials, the method of creating the blank layout plan for each combination by recombining the sequence of use of the plate materials and the appropriating sequence of the orders to the plate materials with the predetermined algorithm is disclosed (For example, see Patent Document 3).

Patent Document 1 Japanese Patent Application Laid-open No. Hei 6-149850.
Patent Document 2 Japanese Patent Application Laid-open No. 2002-269161
Patent Document 3 Japanese Patent Application Laid-open No. Hei 6-142724

However, in the blank layout method of the aforementioned prior art shown in Fig. 11, it is possible to obtain the optimum solution of the combination of the number of orders: the number of sets: and the number of actual articles in a certain period of time by calculation of a computer when the number of orders and the number of actual articles are up to about 10, but when the number of orders and the number of actual articles exceed 10, there arises the problem that the calculation amount increases dramatically and it becomes difficult to solve within the realistic time.

The present invention is made in view of the above-described circumstances, and has its object to provide an information processing apparatus, an information processing system, an information processing method and a recording medium of the same capable of calculating the optimum solution of the blank layout to assign the product coils corresponding to the orders to the actual articles with a less calculation amount.

Further, the present invention preferably has its object to provide the information processing apparatus, the information processing system, the information processing method and the recording medium of the same capable of calculating the optimum solution of the blank layout to assign the product coils corresponding to the orders to the actual articles, with less calculation amount in consideration of information concerning a flaw of the product coils.

Summary of the Invention

This invention is made to solve the aforementioned problem, and in an information processing apparatus according to the present invention, an information processing apparatus for performing processing of assigning ordered products being products corresponding to a plurality of orders to any of a plurality of kinds of base materials, characterized by comprising a virtual order creating unit for creating a virtual order combining a part of or all of the plurality of orders to be optimum for virtual base materials based on order information being information concerning the plurality of orders and virtual base material information being information concerning the virtual base materials created by combining the plurality of kinds of base materials and an assigning unit for creating assignment information of assigning the virtual order created by said virtual order creating unit to the one or more optimum ones among the base materials.

One mode example of the information processing apparatus according to the present invention is characterized in that the virtual order creating unit creates the virtual orders of a plurality of patterns, and creates the virtual order by determining an optimum pattern by assigning the virtual orders of the plurality of patterns to each of the virtual base materials and evaluating them.

One mode example of the information processing apparatus according to the present invention is characterized in that the virtual order creating unit evaluates width yield of at least the virtual order with respect to the virtual base materials by assigning the virtual orders of the plurality of patterns to each of the virtual base materials.

One mode example of the information processing apparatus according to the present invention is characterized in that the assigning unit creates the assignment information by determining an optimum assignment pattern by assigning the virtual orders to the base material with a plurality of assignment patterns and evaluating them.

One mode example of the information processing apparatus according to the present invention is characterized in that the assigning unit evaluates at least whether the base material is to be used partially or not by assigning the virtual orders to the base material with a plurality of assignment patterns.

One mode example of the information processing apparatus according to the present invention is characterized in that the base material is a metal base material in a sheet shape or a band shape having a width and a length, and the assignment information is information determining a width and a length cut out with the ordered products with respect to the base material.

One mode example of the information processing apparatus according to the present invention is characterized by further comprising a virtual base material creating unit for creating virtual base material information being information concerning a virtual base material combining portions including no flaw based on base material information and flaw information, when the flaw information being information concerning a flaw of the base materials is included in the base material information being information concerning the plurality of kinds of base materials.

In an information processing system according to the present invention, the information processing system with a plurality of devices connected communicably with each other is characterized in that at least one device among the plurality of devices is an information processing apparatus for performing processing of assigning ordered products being products corresponding to a plurality of orders to any of a plurality of kinds of base materials; wherein the information processing apparatus comprises a virtual order creating unit for creating a virtual order combining a part of or all of the plurality of orders to be optimum for virtual base materials based on order information being information concerning the plurality of orders and virtual base material information being information concerning the virtual base materials created by combining the plurality of kinds of base materials and an assigning unit for creating assignment information of assigning the virtual order created by the virtual order creating unit to the one or more optimum ones among the base materials.

In an information processing method according to the present invention, an information processing method using an information processing apparatus for performing processing of assigning ordered products being products corresponding to a plurality of orders to any of a plurality of kinds of base materials, and characterized by comprising a first step of creating a virtual order combing a part of or all of the plurality of orders to be optimum for the virtual base materials based on order information being information concerning the plurality of orders and virtual base material information being information concerning the virtual base materials created by combining the plurality of kinds of base materials, and a second step of creating assignment information of assigning the virtual order created in the first step to the one or more optimum ones among the base materials the optimum base material.

A recording medium according to the present invention is a recording medium recording a program for an information processing apparatus for performing processing of assigning ordered products being products corresponding to a plurality of orders to any of a plurality of kinds of base materials, and is a computer readable recording medium recording the program to make a computer execute a first step of creating a virtual order combining a part of or all of the plurality of orders to be optimum for the virtual base materials based on order information being information concerning the plurality of orders and virtual base material information being information concerning the virtual base material created by combining the plurality of kinds of base materials, and a second step of creating assignment information of assigning the virtual order created in the first step to the one or more optimum ones among the base materials the optimum base material.

Brief Description of the Drawings

Fig. 1 is a diagram showing a schematic constitution of an information processing apparatus in a first embodiment of the present invention;

Fig. 2A is a diagram showing relationship between total prolongations of actual articles and lengths of virtual actual articles according to width;

Fig. 2B is a diagram showing relationship between the total prolongations of the actual articles and the lengths of the virtual actual articles;

Fig. 3 is a chart showing an operation of an information processing apparatus 10 shown in Fig. 1;

Fig. 4A is a diagram showing a specification example common to a plurality of actual articles in this embodiment;

Fig. 4B is a diagram showing concrete examples of orders for the actual articles including the specification shown in Fig. 4A;

Fig. 4C is a diagram showing concrete examples of virtual actual articles created by a virtual actual article creating unit 24 in this embodiment;

Fig. 5 is a diagram showing sets 1 to 5 of a plurality of patterns created by a set creation processing unit 25;

Fig. 6 is a diagram showing evaluation values when the sets 1 to 5 in Fig. 5 are assigned to a virtual actual article X;

Fig. 7 is a diagram showing evaluation values when the sets 1 to 5 in Fig. 5 are assigned to a virtual actual article Y;

Fig. 8 is a diagram showing a plurality of assignment patters (cases A to E) created by an assignment processing unit 26;

Fig. 9 is a diagram showing evaluation values according to the assignment patterns shown in Fig. 8;

Fig. 10 is a chart showing an operation of an information processing apparatus 10 in a second embodiment; and

Fig. 11 is a diagram showing relationship between a plurality of orders, sets and actual articles (parent coils).

Detailed Description of the Preferred Embodiments

Embodiments of the present invention will be explained hereinafter.

First, a schematic constitution of an information processing apparatus in a first embodiment of the present invention will be explained by using the drawings. The information processing apparatus of this embodiment performs processing of assigning ordered products (product coils) which are the products corresponding to a plurality of orders to any of actual articles (parent coils) which are band-shaped steel products having a plurality of kinds of widths and lengths.

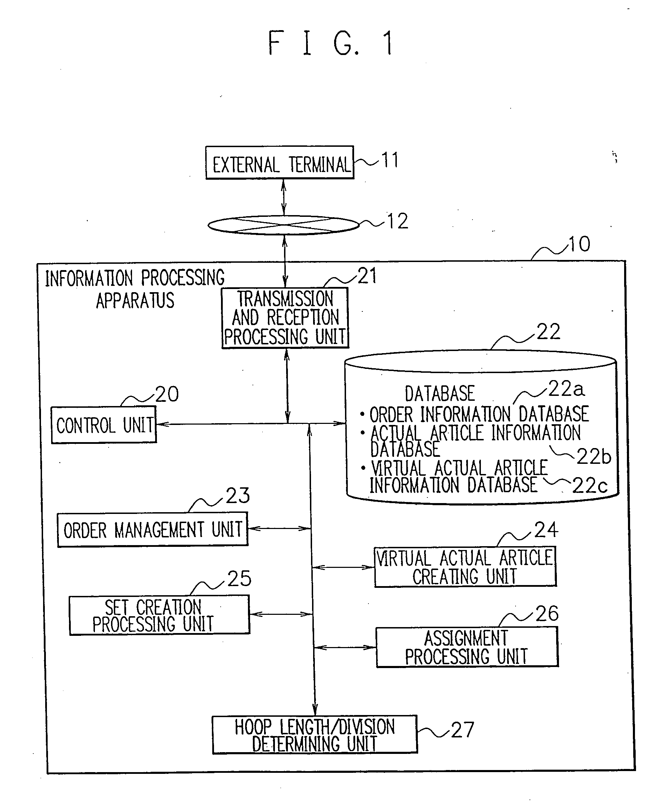

Fig. 1 is a diagram showing a schematic constitution of the information processing apparatus in the first embodiment of the present invention. In FIG. 1, reference numeral 10 denotes an information processing apparatus, which performs processing of assigning a plurality of ordered products (product coils) to any of a plurality of kinds of actual articles (parent coils) corresponding to the orders. The information processing apparatus 10 especially creates a set (virtual order) combining a part of or all of a plurality of orders corresponding to a virtual actual article, and allocates the actual article to the set, thereby performing the processing of assigning the ordered products to the actual article, as a result. The virtual actual article will be explained in detail later.

Reference numeral 11 denotes an external terminal, which is a computer terminal communicable with the information processing apparatus 10 via a network 12. The network 12 is a public network such as the Internet, a private line or the like. It is preferable that the external terminal 11 is a terminal for order which transmits, for example, new order information, or a terminal for actual article manufacturing information, which transmits the information concerning newly manufactured actual articles. Namely, the external terminal 11 is a terminal which provides the information needed to be inputted/updated from an outside to the information processing apparatus 10.

The aforementioned information processing apparatus 10 and the external terminal 11 may include an input unit such as a mouse and a keyboard, and a display unit such as a CRT (Cathode Ray Tube) and a liquid crystal display. When the information processing apparatus 10 includes the input unit, various kinds of information such as the aforementioned order information may be directly inputted from the input unit in the information processing apparatus 10. Further, when the information processing apparatus 10 has a reading function for a recording medium, the information processing apparatus 10 may obtain the order information and the like by reading the information from the recoding medium in which the order information and the like are recorded.

Next, a constitution inside the information processing apparatus 10 will be explained.

Reference numeral 20 denotes a control unit, which controls each processing unit, flow of data and the like in the information processing apparatus 10. Reference numeral 21 denotes a transmission and reception processing unit, which conducts communication with the external terminal 11 via the network 12. Reference numeral 22 denotes a database, which includes an order information database 22a, an actual article information database 22b and a virtual actual article information database 22c as the information necessary for the processing of assigning the product coils to the aforementioned actual articles.

The order information database 22a stores order width (mm), and order weight (kg) as the order information. In this embodiment, the thickness, specific gravity, quality/characteristics of a steel band that is the actual article of which order is received are assumed to be fixed to simplify the explanation. Specifically, it is 0.5 mm thick, with specific gravity of 7.5 g/cm$^3$, and a non-oriented electromagnetic steel sheet as the quality/characteristics. The thickness, specific gravity and quality/characteristics of the steel band are not limited to being fixed as shown in this embodiment, but the processing may performed for the steel bands having various thicknesses, specific gravities and qualities/characteristics, and in this case, the order information includes the information specifying them.

The actual article information database 22b stores the information concerning the actual articles as the actual article information. More specifically, the information concerning the widths and lengths of a plurality of actual articles for which a slit operation is possible (=possessed as stock). The slit operation is the operation of cutting the actual article into the product coils. The virtual actual article information database 22c stores information concerning virtual actual articles created by a virtual actual article creating unit 24 that will be described later as the virtual actual article information. Specifically, the information concerning the width and length of the virtual actual article is stored. The details of the virtual actual article information will be described later.

Reference numeral 23 denotes an order management unit, which manages order information stored in the order information database 22a. Specifically, the order management unit 23 selects the order information to be collectively processed from the order information database 22a. The order management unit 23 manages whether the order information stored in the order information database 22a is the aforementioned order information for which assignment processing has been already finished or not. The order management unit 23 also performs processing of storing the newly received order information into the database 22a when the transmission and reception processing unit 21 receives the new order information.

Reference numeral 24 denotes a virtual actual article creating unit, which creates virtual actual articles having a predetermined number of kinds of combined widths based on the actual article information referring to the actual article information database 22b. At this time, the length of each of the virtual actual articles has the value (hereinafter, referred to as total prolongation) obtained by totaling the lengths of the actual articles having the widths exceeding the width of each of the virtual actual article. This utilizes the fact that the product coil, which can be assigned to the virtual actual article with the minimum width, can be assigned to the virtual actual article with a larger width. Namely, it is possible to allocate a longer virtual actual article to the product coil with a small width.

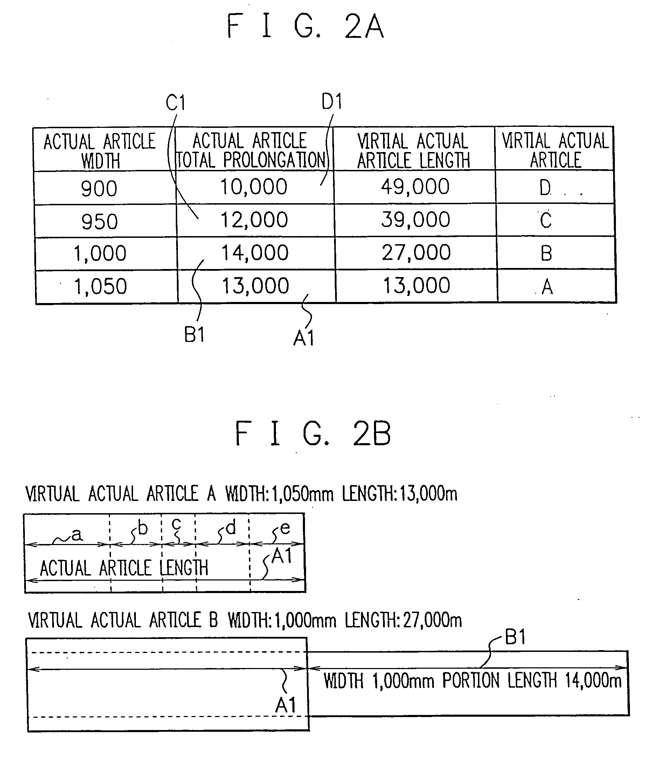

The relationship between the total prolongation of the actual articles and the length of the virtual actual article will be explained by citing the concrete example. Fig. 2A and Fig. 2B are diagrams each showing the relationship between the total prolongations of the actual articles and the lengths of the virtual actual articles according to widths. As shown in FIG. 2A, it is assumed that four kinds of actual articles with widths of 900 mm, 950 mm, 1000 mm and 1050 mm have the total prolongations of 10000 m, 12000 m, 14000 m and 13000 m, respectively. Here, when the virtual actual article creating unit 24 creates the virtual actual articles A to D with the same four kinds of widths as those of the actual articles, the lengths of the respective virtual actual articles (hereinafter, called the virtual actual article lengths) are as follows. It should be noted that the virtual actual article A has a width of 1050 mm, the virtual actual article B has a width of 1000 mm, the virtual actual article C has a width of 950 mm and the virtual actual article D has a width of 900 mm.

The virtual actual article A has the maximum width, and therefore the virtual actual article length is 13000 m, which is the total prolongation of the actual articles of the width of 1050 mm, as it is. Specifically, as shown in Fig. 2B, the virtual actual article crating unit 24 totals the actual article lengths a to e of the width of 1050 mm and obtains the total prolongation A1 of the actual articles of the width of 1050 mm, A1 = 13000 m, and sets it as the virtual actual article length. As shown in Fig. 2A, the virtual actual article creating unit 24 similarly obtains the total prolongation B1 of the actual articles of the width of 1000 m, B1 = 14000 m, the total prolongation C1 of the actual articles of the width of 950 mm, C1 = 12000 m, and the total prolongation D1 of the actual articles of the width of 900 mm, D1 = 10000 m. Next, the virtual actual article creating unit 24 obtains the virtual actual article length of the virtual actual article B = A1 + B1 = 27000 m. Similarly, the virtual actual article creating unit 24 obtains the virtual actual article length of the virtual actual article C = A1 + B1 + C1 = 39000 m, and obtains the virtual article length of the virtual actual article D = A1 + C1 + D1 = 49000 m. From the above, the result is as shown in the table of Fig. 2A.

Fig. 2B shows the relationship between the aforementioned virtual actual article A (1050 mm in width) and the virtual actual article B (1000 mm in width). The virtual actual article length of the virtual actual article B is obtained by adding the, total prolongation B1 of the actual articles of the width of 1000 mm to the virtual actual article length 13000 m of the virtual actual article A (= the total prolongation A1 of the actual articles of the width of 1050 mm). As shown above, the virtual actual article B is constituted of the actual articles of the width of 1050 mm that can respond to the order of the width of 1000 mm and the actual articles of the width of 1000 mm. The virtual actual article information created by the virtual actual article creating unit 24 as described above is stored in the virtual actual article information database 22c.

Reference numeral 25 is a set creation processing unit, which creates a set that is the virtual order information combining a part of or all of a plurality of orders to be optimum for the virtual actual article based on the order information that is the information concerning a plurality of orders referring to the order information database 22a and the virtual actual article information created by the virtual actual article creating unit 24, referring to the virtual actual article information database 22c. The set in this embodiment is determined by the set width corresponding to the width of the virtual actual article and the set length corresponding to the length of the virtual actual article.

Reference numeral 26 denotes an assignment processing unit, which performs processing of assigning the set created by the set creation processing unit 25 to the optimum actual article. Specifically, the assignment processing unit 26 assigns the sets created by the set creation processing unit 25 to the actual articles with a plurality of assigning patterns and evaluates them, and thereby determines the optimum assigning pattern and creates the assignment information.

Reference numeral 27 denotes a hoop length/division determining unit, which determines the hoop length to set a cutting position in a lengthwise direction of each actual article to which the set is assigned, a dividing position in a width direction, and the like. The hoop length is the length of the individual product coil which is cut out from the actual article corresponding to an order. As for the hoop length, a range of the length is fixed according to each order by the width, thickness and the specific gravity of the product coil to satisfy the single weight constraint (maximum weight, minimum weight) for restraining the weight of the individual coil which is specified by the orderer and the outer diameter criterion (maximum value of the outer diameter of the product coil). In the following explanation, the maximum value of the hoop length in each order is set as the maximum hoop length, and the minimum value of the hoop length is set as the minimum hoop length.

From the above processing, the information processing apparatus 10 can create the assignment information of the product coils corresponding to the order being assigned to a plurality of actual articles efficiently based on a plurality of orders.

Each of the processing units of the information processing apparatus 10 shown in Fig. 1 may be realized by exclusive hardware, each of the processing units may be constituted of memory and the CPU (central processing unit), and the function of each of the processing units may be realized by reading a program for realizing the function of each of the processing units into the memory and executing it.

The above-described memory is constituted of a hard disc device, a magneto-optical device, nonvolatile memory such as a flash memory, a recording medium only readable such as a CD-ROM, volatile memory such as RAM (Random Access Memory), or a recording medium readable and writable by the combination of these.

Next, an operation of the aforementioned information processing apparatus 10 will be explained.

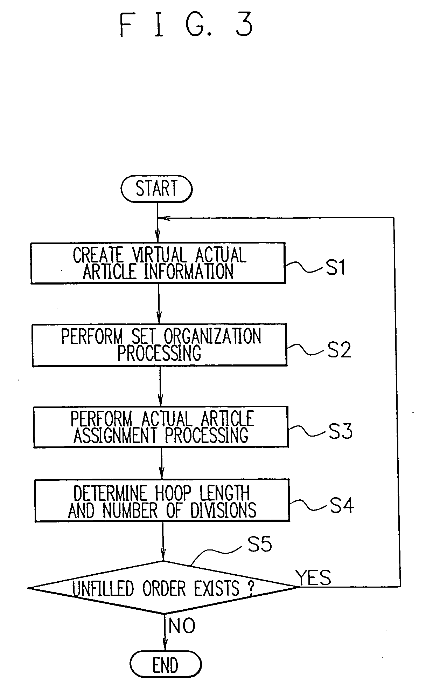

Fig. 3 is a chart showing the operation of the information processing apparatus 10 shown in Fig. 1. First, the virtual actual article creating unit 24 of the information processing apparatus 10 creates virtual actual articles with a plurality of kinds of combined widths based on the actual article information referring to the actual article information database 22b (step S1). At this time, the virtual actual article information created by the virtual actual article creating unit 24 is stored in the virtual actual article information database 22c.

Next, the set creation processing unit 25 creates a set by organizing a part of or all of a plurality of orders to be optimum for the virtual actual article based on the order information referring to the order information database 22a, and the virtual actual article information referring to the virtual actual article information database 22c (step S2). Specifically, the set creation processing unit 25 creates sets with a plurality of patterns, calculates evaluation values with "set width yield", "unfilled orders", "excess area" and the like as the evaluation items, and creates the optimum set for the virtual actual article in accordance with the evaluation values. Here, "set width yield" is the ratio of the set width to the width of the virtual actual article. "Unfilled order" is the remaining amount of orders after the sets are organized (for example, remaining order area). "Excess area" is the excess amount of the total area of the created sets with respect to the total area of all the orders organized in the sets. A concrete example of calculation of the evaluation values will be described later.

Further, the set creation processing unit 25 creates the sets to satisfy the constraints cited as follows.

· The number of sets organized at one time shall be only one set.

·The set length shall be the length of the virtual actual article or shorter so that the actual article does not become insufficient.

·The order of the largest width is given priority among a plurality of orders.

·When the order is given priority, this order shall be prior to the other orders.

·The orders organized in the same set as the order given priority shall have the widths of "the maximum virtual actual article width - the width of the order given priority" or less.

·One order may be divided and organized in a plurality of sets.

·The hoop length shall be the length satisfying the outer diameter criterion and the single weight constraint of the order.

As a concrete example, the equations to obtain the hoop length A and the hoop length B will be shown.

$$\text{Hoop length A} = \pi \times [(\text{outer diameter} / 2)^2 - (\text{inner diameter} / 2)^2] / \text{thickness}$$

$$\text{Hoop length B} = \text{single weight} \times 1000 / (\text{width} \times \text{thickness} \times \text{specific gravity})$$

In the above-described equations, "outer diameter" is the value in the range which satisfies the aforementioned outer diameter criterion, and "single weight" is the value in the range which satisfies the aforementioned single weight constraint. As a result, the hoop length A and the hoop length B have the values each in the range which satisfies the above-described constraints. In this embodiment, the maximum value of the overlapping portions in the ranges of the hoop length A and the hoop length B is set as the maximum hoop length, and the minimum value of the overlapping portions is set as the minimum hoop length.

·The orders are organized in consideration of the maximum hoop length and the minimum hoop length of each of the orders.

Specifically, when the following equations are satisfied in the order A and the order B, organizing the two orders in one set is forbidden.

Maximum hoop length of the order A < minimum hoop length of the order B

Minimum hoop length of the order A > maximum hoop length of the order B

·The set length shall be larger length than the minimum hoop length of all the orders organized at least in the set.

·The excess area of the set with respect to the orders shall be up to a fixed rate of the order area (for example, 20%).

The set creation processing unit 25 can organize the set which has the hoop length corresponding to each of the orders by satisfying the constraints shown above. Efficient sets with both the yields in the lengthwise direction and the width direction taken into consideration can be organized by setting the excess area at the fixed rate or less.

In the set creation processing unit 25, the constraint examples shown as follows may be further added.

·The orders are organized in accordance with specified trim margins.

Here, the trim margin means the width which is cut off (which is not used as a product) at an end portion of a steel band, and is the value which the orderers and the users of the information processing apparatus 10 can specify. When the orders with different trim margin specifications are organized in the same set, the constraint that the orders with less trim margins are disposed at the both end portions of the steel band is added in this embodiment.

·The number of orders which can be organized in one set is constrained.

·The number of lines organized in one set is constrained.

Here, the number of lines means the number of divisions in the width direction in one set.

As a result, the number of lines can be restrained in accordance with the equipment of the factory (for example, the number of devices for winding up the product coils).

Next, the assignment processing unit 26 performs processing of assigning the sets created by the set creation processing unit 25 to the optimum actual articles (step S3). Specifically, the assignment processing unit 26 creates assignment of a plurality of patterns to the actual articles, calculates the estimation values with "the number of actual articles with remains", "actual article use area", "actual article width yield" and the like as the evaluation items, and creates the optimum sets for the virtual actual articles according to the evaluation values. The concrete examples of calculation of the estimate values will be described later. Here, "the number of actual articles with the remains" is the number of actual articles with large unused portions remaining after assignment. "Actual article use area" is the total area of the product coils assigned to the actual article. "Actual article width yield" is the ratio of the width of the unused portion to the width of the actual article after assignment.

At this time, the assignment processing unit 26 performs assigning processing to satisfy the constraints which will be cited next.

·The set length and set width of the set, and the maximum value and the minimum value of the hoop length in the same set shall be satisfied.
·The total hoop length of the product coils assigned to the actual article shall be the set length or more.
·One set can be assigned to a plurality of actual articles.
·The set width shall be the available width (width other than the trim margin) of the actual article or less.
·The total length of the actual articles with assignment shall be the set length or more.
·When the set is assigned to each actual article, the set is assigned by dividing each actual article into n/m.

It should be noted that n and m are natural numbers, and $n \leqq m$.

In this embodiment, six kinds of divisions of 1/4, 1/3, 1/2, 2/3, 3/4 and 1(1/1) are assigned. This prevents fragmentary scraps from being left from the actual articles.

·The unused portion (remaining length) in the actual article after assignment shall be the minimum value of the actual article remains. It should be noted that the minimum value of the actual article remains is the value which the users can set optionally.
·As for the assignment to the actual article, any one of the aforementioned divisions of six patterns is selected to satisfy the constraint regarding the hoop length of all the orders included in the set.

(Specifically, the division pattern within the range which is obtained by multiplying the maximum hoop length and the minimum hoop length by an integer is selected.)

By satisfying the constraints shown above, the assignment processing unit 26 can assign the set to the actual article to achieve the hoop length corresponding to each order. The assignment processing unit 26 can assign the set to the actual article so that fragmentary scraps are not left in the lengthwise direction.

Further, the constraints as shown bellow may be added. For example, the assignment can be made so that the actual articles can be used in the order of earlier date of manufacture by performing assignment to the actual articles in the order of earlier date of manufacture, for the actual articles having the similar widths and lengths, in the assignment processing unit 26. The storage space for the actual articles may be taken into consideration in addition to the date of manufacture. This makes it possible to assign the actual articles stored in the nearer place to the slitting operation site.

Next, the hoop length/division determining unit 27 determines the hoop length and the division positions in the width direction for the actual article in accordance with the set assigned to each actual article (step S4). Next, the order management unit 23 determines whether the set creation processing unit 25 finishes organizing all orders as sets or not (step S5). Here, when the set creation processing unit 25 finishes organizing all the orders as the sets (NO in step S5), the assigning operation of the product coils to the actual articles is finished. When the set creation processing unit 25 does not finish organizing all the orders as the set and there are unfilled orders (Yes in step S5), the command is given to return to step S1.

As shown in the above, the information processing apparatus 10 repeats the operations of steps S1 to step S4 until the unfilled orders or the actual articles with remains do not exist.

In the aforementioned information processing apparatus 10, a lowest yield may be set in the yield for the width direction of the virtual actual article (hereinafter, called width yield). As a result, when the lowest yield is not satisfied, the set creation processing unit 25 lowers the lowest yield by a predetermined percentage, and creates sets again. This reduces the time required for the processing of obtaining the combination which satisfies the lowest yield, and therefore the speed at which sets are created can be enhanced. At this time, the lowest limit value of the lowest yield is set. When the number of unfilled orders is only one, the set is created by ignoring the constraints of the lowest yield which is set.

As shown in the above, it is preferable to add various constraints according to the kinds of orders, equipment of the slitting operation and the like to the processing in the set creation processing unit 25 and the assignment processing unit 26. The combination of the constraints when the set creation processing unit 25 creates the sets in the aforementioned information processing apparatus 10 is not limited to what is described above, but it is preferable that the set creation processing unit 25 utilizes an optional combination of the aforementioned constrains. The combination of the constraints when the assignment processing unit 26 performs assigning processing is not limited to what is mentioned above, but it is preferable that the assignment processing unit 26 utilizes an optional combination of the aforementioned constraints.

Next, concrete examples of the set creating processing of the set creation processing unit 25 in the information processing apparatus 10 of this embodiment will be shown, and a detailed operation will be explained.

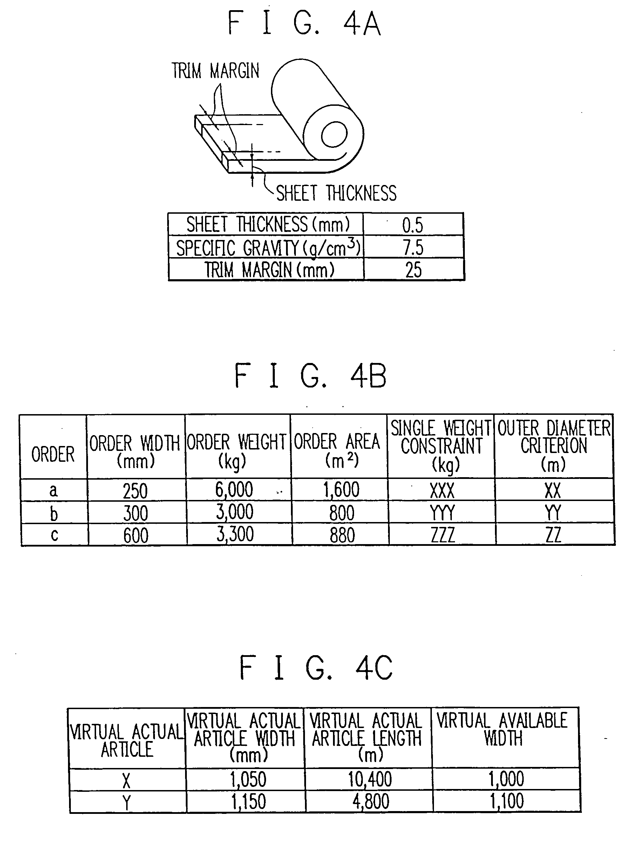

First, the common specifications of a plurality of actual articles will be explained by showing a concrete example. Fig. 4A is a diagram showing an example of common specifications of a plurality of actual articles in this embodiment. As shown in Fig. 4A, the actual article in this concrete example has a sheet thickness of 0.5 mm, a specific gravity of 7.5 g/cm$^3$, and a trim margin of 25 mm.

Next, concrete examples of orders to the actual article including the specifications shown in Fig. 4A will be shown. Fig. 4B is a diagram showing a concrete example of the orders to the actual article including the specifications shown in Fig. 4A. As shown in Fig. 4B, there are a plurality of orders a, b and c. The order a has an order width of 250 mm, an order weight of 6000 kg and an order area of 1600 m$^2$. The order b has an order width of 300 mm, an order weight of 3000 kg and an order area of 800 m$^2$. The order c has an order width of 600 mm, an order weight of 3300 kg and an order area of 880 m$^2$. The order area is obtained from the following equation utilizing the order weight and the aforementioned specific gravity and sheet thickness.

```
Order area = order weight / (specific gravity ×

sheet thickness)
```

As shown in Fig. 4B, the aforementioned weight constraints and the outer diameter criteria are set for the orders a to c.

Next, concrete examples of the virtual actual article which the virtual actual article creating unit 24 creates by combining the actual articles to be in a predetermined width and virtualizing them, when the actual articles including the specifications as shown in Fig. 4A have various widths and lengths. Fig. 4C is a diagram showing concrete examples of the virtual actual articles which the virtual actual article creating unit 24 creates. Here, the virtual actual articles X and Y are created by the virtual actual article creating unit 24 performing the virtual actual article creating processing for an actual article r (actual article width of 1050 mm, and actual article length of 2400 m), an actual article s (actual article width of 1100 mm and actual article length 3200 m), and an actual article t (actual article width of 1150 mm and actual article length of 4800 m), for example. The information concerning the virtual actual articles which the virtual actual article creating unit 24 creates is stored in the virtual actual article information data base 22c.

As shown in Fig. 4C, the virtual actual article X has a virtual actual article width of 1050 mm, a virtual actual article length of 10400 m, and a virtual available width of 1000 mm. The virtual actual article Y has a virtual actual article width of 1150 mm, a virtual actual article length of 4800 m and a virtual available width of 1100 mm. The virtual available width is the value obtained by subtracting the aforementioned trim margin x 2 (for both ends) from the virtual actual article width. As shown in Fig. 4C, the virtual actual article length of the virtual actual article X is the total value of the actual article lengths of the actual articles r, s and t having the widths of the virtual actual article width 1050 mm or more.

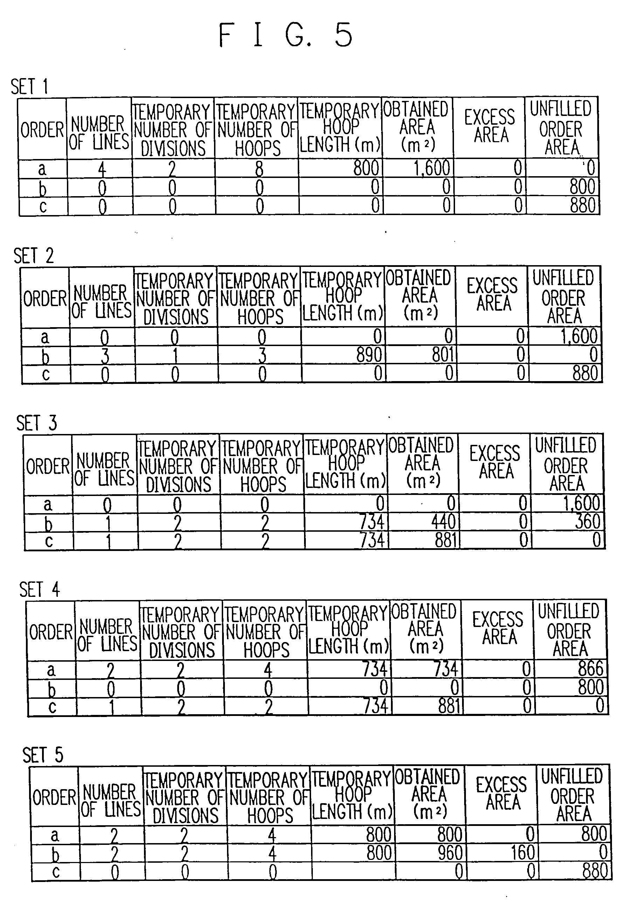

When the set creation processing unit 25 performs the set creating processing for the orders and the virtual actual articles shown in Fig. 4B and Fig. 4C, the set creation processing unit 25 creates the sets with a plurality of patterns as shown in, for example, Fig. 5.

Fig. 5 is a diagram showing sets 1 to 5 of a plurality of patterns which the set creation processing unit 25 creates. As shown in Fig. 5, a set 1 is the set in which only the order a is organized. In the set 1, the number of lines which is the number of divisions in the width direction corresponding to the order a is four, the temporary number of divisions which is the temporary number of divisions in the lengthwise direction is two, the temporary number of hoops which is obtained from the number of lines x the temporary number of divisions is eight, and the temporary hoop length which is the temporary length of hoop is 800 m. The set creation processing unit 25 obtains the temporary hoop length in accordance with the constraints at the time of creating the aforementioned set.

An obtained area (m$^2$) is obtained from the order width (m) x the temporary number of hoops x the temporary hoop length (m). In the set 1, the obtained area = 0.25 x 8 x 800 = 1600 m$^2$. The excess area is obtained by the obtained area - the order area. In the set 1, the excess area = 1600 - 1600 = 0 m$^2$. It should be noted that in this embodiment, the excess area is obtained only when the excess amount of the obtained area is 3% or more of the order area. The unfilled order area is obtained from the order area - the obtained area. The unfilled order area is calculated when the order area is larger than the obtained area. In the set 1, the orders b and c are not organized in the set 1, and therefore all the order areas of the order b of 800 m² and the order c of 880 m² remain.

The set length of the set 1 at this time is obtained from the temporary hoop length x the temporary number of divisions. Specifically, the set length in the set 1 = 800 x 2 = 1600 m. The set width in the set 1 is obtained from the number of lines x order width. Specifically, the set width in the set 1 = 4 x 250 = 1000 m.

The set 2 is the set in which only the order b is organized. In the set 2, the number of lines corresponding to the order b is three, the temporary number of divisions is one, the temporary number of hoops is three, and the temporary hoop length is 890 m. By the same calculation as the set 1, the obtained area of 801 m², the excess area of 0 m² for the order b, the unfilled order area of 1600 m² of the order a, the unfilled order area of 880 m² of the order c are obtained.

The set 3 is the set in which the order b and the order c are organized. In the set 3, the number of lines corresponding to the order b is 1, the temporary number of divisions is 2, the temporary number of hoops is 2, and the temporary hoop length is 734 m. The number of lines corresponding to the order c is 1, the temporary number of divisions is 2, the temporary number of hoops is 2, and the temporary hoop length is 734 m. The unfilled order area of 1600 m² of the order a, the obtained area of 440 m² corresponding to the order b, the excess area of 0 m² for the order b, the unfilled order area of 360 m² of the order b, the obtained area of 881 m² corresponding to the order c, the excess area of 0 m² for the order c and the unfilled order area of the order c of 0 m² are obtained from the same calculation as the aforementioned set 1.

The set 4 is the set in which the order a and the order c are organized. In the set 4, the number of lines corresponding to the order a is 2, the temporary number of divisions is 2, the temporary number of hoops is 4, and the temporary hoop length is 734 m. The number of lines corresponding to the order c is 1, the temporary number of divisions is 2, the temporary number of hoops is 2, and the temporary hoop length is 734 m. The unfilled order area of 800 m² of the or der b, the obtained area of 734 m² corresponding to the order a, the excess area of 0 m² for the order a, the unfilled order area of 866 m² of the order a, the obtained area of 881 m² corresponding to the order c, the excess area of 0 m² for the order c and the unfilled order area 0 m² of the order c are obtained from the same calculation as the aforementioned set 1.

The set 5 is the set in which the order a and the order b are organized. In the set 5, the number of lines corresponding to the order a is 2, the temporary number of divisions is 2, the temporary number of hoops is 4, and the temporary hoop length is 800 m. The number of lines corresponding to the order b is 2, the temporary number of divisions is 2, the temporary number of hoops is 4, and the temporary hoop length is 800 m. The unfilled order area of 880 m² of the order c, the obtained area of 800 m² corresponding to the order a, the excess area of 0 m² for the order a, the unfilled order area of 800 m² of the order a, the obtained area of 960 m² corresponding to the order b, the excess area of 160 m² for the order b and the unfilled order area of the order b of 0 m² are obtained from the same calculation as the aforementioned set 1.

As shown in the above, the set creation processing unit 25 creates sets of a plurality of patterns based on the temporary set length and the temporary number of divisions which satisfy the constraints.

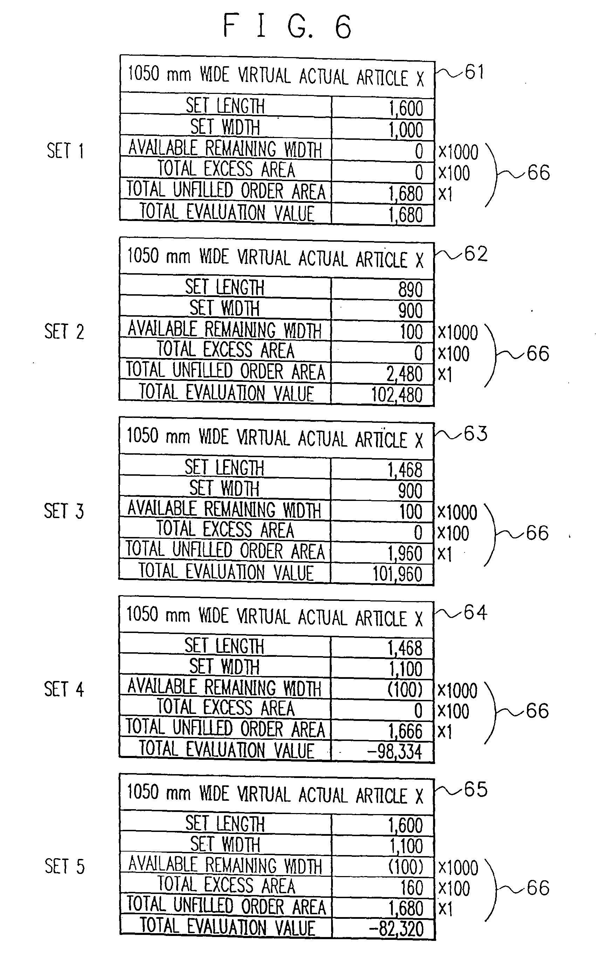

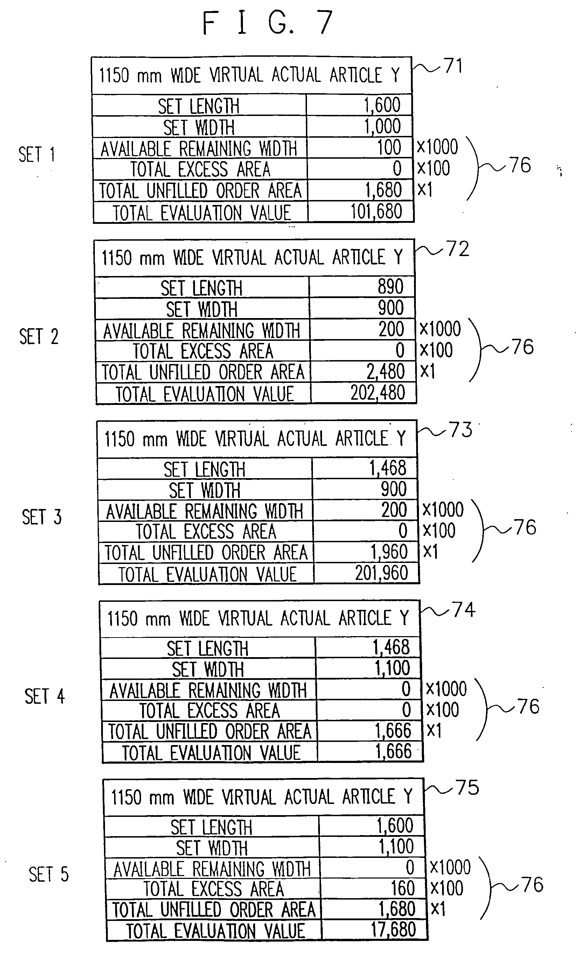

Next, processing of the set creation processing unit 25 evaluating the created sets of a plurality of patterns according to the virtual actual articles and determining the optimum combination of the virtual actual article and the set will be explained. Fig. 6 is a diagram showing the evaluation values when the sets 1 to 5 in Fig. 5 are assigned to the virtual actual article X. Fig. 7 is a diagram showing the evaluation values when the sets 1 to 5 in Fig. 5 are assigned to the virtual actual article Y.

In Fig. 6, Table 61 is the table showing the evaluation value regarding the set 1 and the virtual actual article X and the values relating to the evaluation value. Specifically, Table 61 is the table showing the set length and the set width of the set 1, and values of the evaluation items necessary for calculation of the evaluation value when the set 1 is assigned to the virtual actual article X. Similarly, Tables 62 to 65 are the tables showing the evaluation values regarding the sets 2 to 5 and the virtual actual article X and the values relating to the evaluation values. Weighting factor 66 is the factor to perform weighting of one time, 100 times and 1000 times according to the evaluation items of the sets 1 to 5 and the virtual actual article X. Namely, it can be said that the larger the value of the weighting factor 66 of the evaluation item, the more important the evaluation item. The details of the weighting factor 66 will be described later.

As shown in Table 61 in Fig. 6, when the set 1 is assigned to the virtual actual article X (hereinafter, simply called "in the case of the set 1/virtual actual article X"), the set length of 1600 m of the set 1 is within the virtual actual article length of the virtual actual article X. The set width of the set 1 is 1000 mm, and therefore the available remaining width is 0 mm. Here, the available remaining width is obtained from the available width of the virtual actual article X - the set width. As described above, the available width of the virtual actual article X is 1000 mm. The total excess area in the case of the set 1/the virtual actual article X is 0 m². Here, the total excess area in the case of the set 1/the virtual actual article X is the total of the excess areas for the orders a to c in the set 1. The total unfilled order area in the case of the set 1/the virtual actual article X is 1680 m². Here, the total unfilled order area in the case of the set 1/virtual actual article X is the total of the unfilled order areas for the orders a to c in the set 1.

The evaluation value in the case of the set 1/the virtual actual article X is 1680. The set creation processing unit 25 in this embodiment determines that the set having larger value of the evaluation value is the set with lower evaluation. The evaluation value is obtained from the available remaining width x 1000 + the total excessive area x 100 + total unfilled order area by utilizing the weighting factor 66 shown in Fig. 6. Namely, as shown in the weighting factor 66 in Fig. 6, the available remaining width is multiplied by 1000 as the most important evaluation item. The total excessive area is multiplied by 100 as the important evaluation item. The total unfilled order area is multiplied by 1 as the ordinary evaluation item. As shown in the above, the change in the values in the important evaluation items can have larger influence on the evaluation value by the weighting factor 66. Namely, the set creation processing unit 25 calculates the evaluation value with the priority according to the evaluation item taken into consideration, and can adopt the optimum set based on the evaluation value.

Next, as shown in Table 62 in Fig. 6, when the set 2 is assigned to the virtual actual article X, the set length of 890 m of the set 2 is within the virtual actual article length of the virtual actual article X. The set width of the set 2 is 900 mm, and therefore the available remaining width is 100 mm. The total excess area is 0 $m^2$, the total unfilled order area is 2480 $m^2$, and the evaluation value is 102480.

Next, as shown in Table 63 in Fig. 6, when the set 3 is assigned to the virtual actual article X, the set length of 1468 m of the set 3 is within the virtual actual article length of the virtual actual article X. The set width of the set 3 is 900 mm, and therefore the available remaining width is 100 mm. The total excess area is 0 $m^2$, the total unfilled order area is 1960 $m^2$, and the evaluation value is 101960.

Next, as shown in Table 64 in Fig. 6, when the set 4 is assigned to the virtual actual article X, the set length of 1468 m of the set 4 is within the virtual actual article length of the virtual actual article X. The set width of the set 4 is 1100 mm, and therefore the available remaining width is -100 mm and this is the width constraint violation. For this reason, the set 4 cannot be adopted.

Next, as shown in Table 65 in Fig. 6, when the set 5 is assigned to the virtual actual article X, the set length of 1600 m of the set 5 is within the virtual actual article length of the virtual actual article X. The set width of the set 5 is 1100 mm, and therefore the available remaining width is -100 mm and this is the width constraint violation. For this reason, the set 5 cannot be adopted.

In Fig. 7, Table 71 is the table showing the evaluation value regarding the set 1 and the virtual actual article Y and values relating to the evaluation value. Specifically, Table 71 is the table showing the set length and the set width of the set 1, and the values of the evaluation items necessary for calculation of the evaluation value when the set 1 is assigned to the virtual actual article Y. Similarly, Tables 72 to 75 are the tables showing the evaluation values regarding the sets 2 to 5 and the virtual actual article Y and the values relating to the evaluation values. Weighting factor 76 is the factor to perform weighting of one time, 100 times and 1000 times according to the evaluation items of the sets 1 to 5 and the virtual actual article Y.

As shown in Table 71 in Fig. 7, when the set 1 is assigned to the virtual actual article Y, the set length of 1600 m of the set 1 is within the virtual actual article length of the virtual actual article Y. From the same calculation as in the case of the aforementioned virtual actual article X, when the set 1 is assigned to the virtual actual article Y, the available remaining width is 100 mm, the total excess area is 0 $m^2$, the total unfilled order area is 1680 $m^2$, and the evaluation value is 101680.

Next, as shown in Table 72 in Fig. 7, when the set 2 is assigned to the virtual actual article Y, the set length of 890 m of the set 2 is within the virtual actual article length of the virtual actual article Y. When the set 2 is assigned to the virtual actual article Y, the available remaining width is 200 mm, the total excess area is 0 $m^2$, the total unfilled order area is 2480 $m^2$, and the evaluation value is 202480.

Next, as shown in Table 73 in Fig. 7, when the set 3 is assigned to the virtual actual article Y, the set length of 1468 m of the set 3 is within the virtual actual article length of the virtual actual article Y. When the set 3 is assigned to the virtual actual article Y, the available remaining width is 200 mm, the total excessive area is 0 $m^2$, the total unfilled order area is 1960 $m^2$, and the evaluation value is 201960.

Next, as shown in Table 74 in Fig. 7, when the set 4 is assigned to the virtual actual article Y, the set length of 1468 m of the set 4 is within the virtual actual article length of the virtual actual article Y. When the set 4 is assigned to the virtual actual article Y, the available remaining width is 0 mm, the total excess area is 0 $m^2$, the total unfilled order area is 1666 $m^2$, and the evaluation value is 1666.

Next, as shown in Table 75 in Fig. 7, when the set 5 is assigned to the virtual actual article Y, the set length of 1600 m of the set 5 is within the virtual actual article length of the virtual actual article Y. When the set 5 is assigned to the virtual actual article Y, the available remaining width is 0 mm, the total excess area is 160 $m^2$, the total unfilled order area is 1680 $m^2$, and the evaluation value is 17680.

As shown in the above, comparing the evaluation values in each Table in Fig. 6 and Fig. 7, it is found out that the evaluation value of the combination of the virtual actual article Y and the set 4 is the minimum value (= the highest value). Namely, the set creation processing unit 25 adopts the combination of the set 4 and the virtual actual article Y.

Next, concrete examples of the assigning processing in the assignment processing unit 26 in the information processing apparatus 10 of this embodiment will be shown, and a detailed operation will be explained.

First, a set (hereinafter, called a set G) which is the basis of the assigning processing in the concrete examples has the set width = 1000 mm and the set length = 4800 m. The actual articles which are the targets of assignment are the aforementioned actual article r (the actual article width of 1050 mm, and the actual article length of 2400 m), actual article s (the actual article width of 1100 mm and the actual article length of 3200 m), and actual article t (the actual article width of 1150 mm and the actual article length of 4800 m).

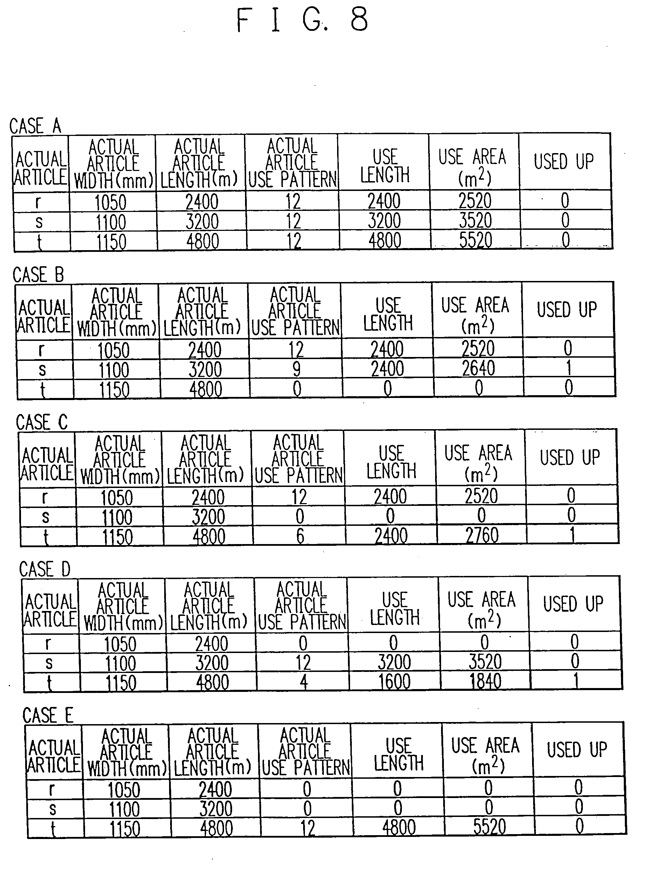

The cases A to E in which the set G is assigned to the aforementioned actual articles r, s and t with a plurality of patterns (hereinafter, called assignment patterns) will be explained. Fig. 8 is the diagram showing a plurality of assignment patterns (the case A to the case E) which the assignment processing unit 26 creates. As described above, there are six kinds of division patterns of 1/4, 1/3, 1/2, 2/3, 3/4, 1 (no division) as the constraints of the divisions in the lengthwise direction in the assignment of the set to the actual article, but as shown in Fig. 8, in this embodiment, zero which means unused is added to this, and seven kinds of actual article use patterns of 0(0), 3(1/4), 4(1/3), 6(1/2), 8(2/3), 9(3/4), and 12(1) are assumed to be defined. As a result that the actual article length and the actual article use pattern are fixed, the "use length" can be obtained. Specifically, it is obtained from the equation of the "use length" = the actual article length x (the actual article use pattern/12).

As a result that "use length" is fixed, the use area can be obtained. Specifically, it is obtained from the equation of the use area = "use length" x actual article width (m). The parameter, "used up" for determining the case in which the actual article is partially used (1/4 to 3/4 (actual article use pattern = 3 to 9)), the case in which all the actual article is used (1 (actual article use pattern = 12)), or the case in which the actual article is not used (0 (actual article use pattern = 0)) is also set. In this embodiment, when the "used up" = 0, it indicates the assignment in which the actual article is used up or the assignment in which the actual article is unused, and when the "used up" = 1, it indicates the assignment in which the actual article is partially used.

As shown in Fig. 8, in the case of the case A, the sets G are assigned to all the actual articles r, s and t so that the actual article use pattern = 12. As a result, in the actual article r, the "use length" = 2400 m, the use area = 2520 $m^2$, and the "used up" = 0. In the actual article s, the "use length" = 3200 m, the use area = 3520 $m^2$ and the "used up" = 0. In the actual article t, the "use length" = 4800 m, the use area = 5520 $m^2$, and the "used up" = 0.

Next, in the case of the case B, the sets G are assigned so that the actual article use pattern = 12 for the actual article r, the actual article use pattern = 9 for the actual article s, and the actual article use pattern = 0 for the actual article t. As a result, in the actual article r, the "use length" = 2400 m, the use area = 2520 $m^2$, and the "used up" = 0. In the actual article s, the "use length" = 2400 m, the use area = 2640 $m^2$ and the "used up" = 1. In the actual article t, the "use length" = 0 m, the use area = 0 $m^2$, and the "used up" = 0.

Next, in the case of the case C, the sets G are assigned so that the actual article use pattern = 12 for the actual article r, the actual article use pattern = 0 for the actual article s, and the actual article use pattern = 6 for the actual article t. As a result, in the actual article r, the "use length" = 2400 m, the use area = 2520 $m^2$, and the "used up" = 0. In the actual article s, the "use length" = 0 m, the use area = 0 $m^2$, and the "used up" = 0. In the actual article t, the "use length" = 2400 m, the use area = 2760 $m^2$, and the "used up" = 1.

Next, in the case of the case D, the sets G are assigned so that the actual article use pattern = 0 for the actual article r, the actual article use pattern = 12 for the actual article s, and the actual article use pattern = 4 for the actual article t. As a result, in the actual article r, the "use length" = 0 m, the use area = 0 $m^2$, and the "used up" = 0. In the actual article s, the "use length" = 3200 m, the use area = 3520 $m^2$, and the "used up" = 0. In the actual article t, the "use length" = 1600 m, the use area = 1840 $m^2$, and the "used up" = 1.

Next, in the case of the case E, the sets G are assigned so that the actual article use pattern = 0 for the actual article r, the actual article use pattern = 0 for the actual article s, and the actual article use pattern = 12 for the actual article t. As a result, in the actual article r, the "use length" = 0 m, the use area = 0 $m^2$, and the "used up" = 0. In the actual article s, the "use length" = 0 m, the use area = 0 $m^2$, and the "used up" = 0. In the actual article t, the "use length" = 4800 m, the use area = 5520 $m^2$, and the "used up" = 0.

As shown in the above, the assignment processing unit 26 creates the assigning patterns in the range which satisfies the constraints. Specifically, the assignment processing unit 26 creates the combinations of the actual article use patterns for a plurality of actual articles in the range which satisfies the constraints.

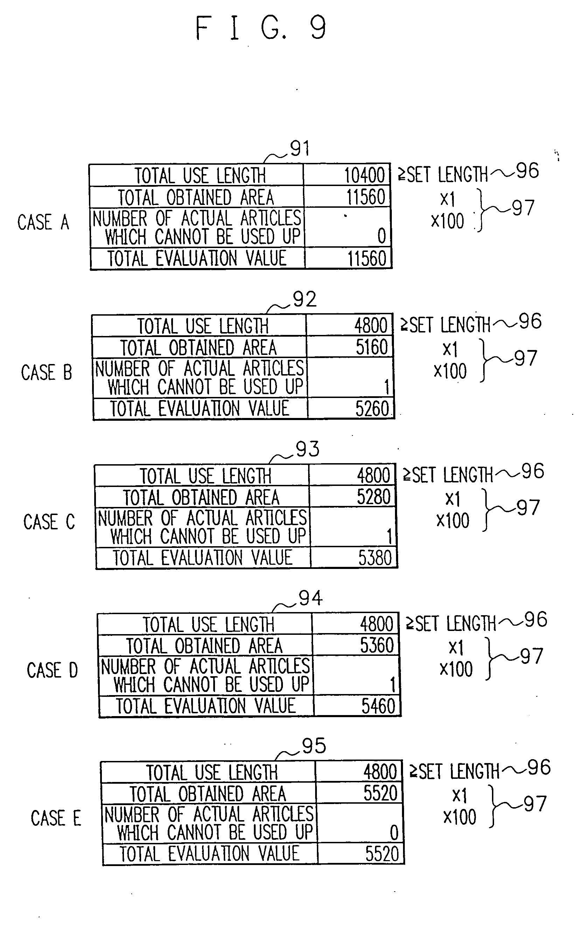

Next, the processing of the assignment processing unit 26 evaluating the created assignment of a plurality of patterns in accordance with the patterns (in accordance with the cases A to E), and determining the optimum assignment pattern will be explained. Fig. 9 is a diagram showing the evaluation values according to the assignment patterns shown in Fig. 8.

In Fig. 9, Table 91 is the table showing the evaluation value and the values relating to the evaluation value when the set G is assigned to the actual articles r, s and t with a plurality of patterns (the cases A to E). Specifically, Table 91 is the table showing the evaluation value and the values of the necessary evaluation items for obtaining the evaluation value in the assignment of the case A. Similarly, Tables 92 to 95 are the tables showing the evaluation values and the values relating to the evaluation values in the assignment of the cases B to E. The set length constraint 96 shows that it is checked whether or not the total use length of the actual article is the set length or more. The weighting factor 97 is the factor for weighting the evaluation items by one time and 100 times in accordance with the evaluation items of the assigning processing. Namely, it can be said that the evaluation item with the larger value of the weighting factor 97 is the more important evaluation item.

As the evaluation items in Fig. 9, there are three kinds of items that are the total use length, the total obtained area, and the number of actual articles which cannot be used up. The total use length is the total value of the use lengths of all the actual articles in each of the cases A to E shown in Fig. 8. The total obtained area is the total value of the use areas of all the actual articles in each of the cases A to E shown in Fig. 8. The number of actual articles which cannot be used up is the number of the actual articles with the "used up" = 1 in each of the cases A to E shown in Fig. 8.

The assignment processing unit 26 in this embodiment determines the assignment with the larger evaluation value as the assignment with the lower evaluation. The evaluation value is obtained from the total obtained area + the number of actual articles which cannot be used up x 100 by utilizing the weighting factor 97 shown in Fig. 9. As shown above, the change in the value in the important evaluation items can have larger influence on the evaluation value by the weighting factor 96. Namely, the assignment processing unit 26 calculates the evaluation values with the priority according to the evaluation items taken into consideration, and can adopt the optimum assignment based on the evaluation values.

As shown in Table 91 in Fig. 9, in the case of the assignment of the case A, the total use length = 10400 m is the set length (= 4800 m) or more. In the case of the case A, the total obtained area = 11560 m$^2$, the number of actual articles which cannot be used up = 0, and the evaluation value = 11560.

As shown in Table 92 in Fig. 9, in the case of the assignment of the case B, the total use length = 4800 m is the set length (= 4800 m) or more. In the case of the case B, the total obtained area = 5160 m$^2$, the number of actual articles which cannot be used up = 1, and the evaluation value = 5260.

As shown in Table 93 in Fig. 9, in the case of the assignment of the case C, the total use length = 4800 m is the set length (= 4800 m) or more. In the case of the case C, the total obtained area = 5280 m$^2$, the number of actual articles which cannot be used up = 1, and the evaluation value = 5380.

As shown in Table 94 in Fig. 9, in the case of the assignment of the case D, the total use length = 4800 m is the set length (= 4800 m) or more. In the case of the case D, the total obtained area = 5360 m$^2$, the number of actual articles which cannot be used up = 1, and the evaluation value = 5460.

As shown in Table 95 in Fig. 9, in the case of the assignment of the case E, the total use length = 4800 m is the set length (= 4800 m) or more. In the case of the case E, the total obtained area = 5520 m$^2$, the number of actual articles which cannot be used up = 0, and the evaluation value = 5520.

As shown above, comparing the evaluation values in Tables 91 to 95 in Fig. 9, it can be found out that the evaluation value of the assignment of the case B is the minimum value (= the highest evaluation). Namely, the assignment processing unit 26 adopts the assignment shown in the case B.

Next, an information processing apparatus in a second embodiment of the present invention which is capable of performing assignment processing with a flaw taken into consideration when the actual article has the flaw. A function constitution of the information processing apparatus of the second embodiment is the same function constitution as that of the information processing apparatus 10 in the first embodiment shown in Fig. 1, and the detailed explanation will be omitted. However, the information processing apparatus 10 of the first embodiment and an information processing apparatus 10 of the second embodiment differ in the points that flaw information being the information concerning the flaw of the actual article is further stored as the actual article information stored in an actual article information database 22b, and that a virtual actual article creating unit 24 performs blank layout of the available portion based on the flaw information included in the actual article information before creation of the virtual actual article, and creates the virtual actual article based on this available portion.

Hereinafter, the actual information database 22b and the virtual actual article creating unit 24 of the second embodiment, which are different from those in the first embodiment will be explained in detail. The flaw information further included in the aforementioned actual article information is specifically the information relating to the spot of a flaw and the size of the flaw, and the like. As for the information relating to the size of the flaw, it is preferable to give a grade according to the size of the flaw (length of the flaw), and the like. The blank layout processing for the available portion based on the flaw information performed by the virtual actual article creating unit 24 is the processing of taking out two of the available portions other than the defect portions (rectangular shape including the flaw) at the maximum in the order of the larger area from the actual article based on the aforementioned flaw information.

The order information database 22a may further include an allowable range of the flaw as the order information. At this time, the allowable range of the flaw may be specified with the length of the flaw, for example, or with the aforementioned grade. At this time, the virtual actual article creating unit 24 determines the flaw exceeding the allowable range as the defect portion by referring to the allowable range of the flaw of the order information.

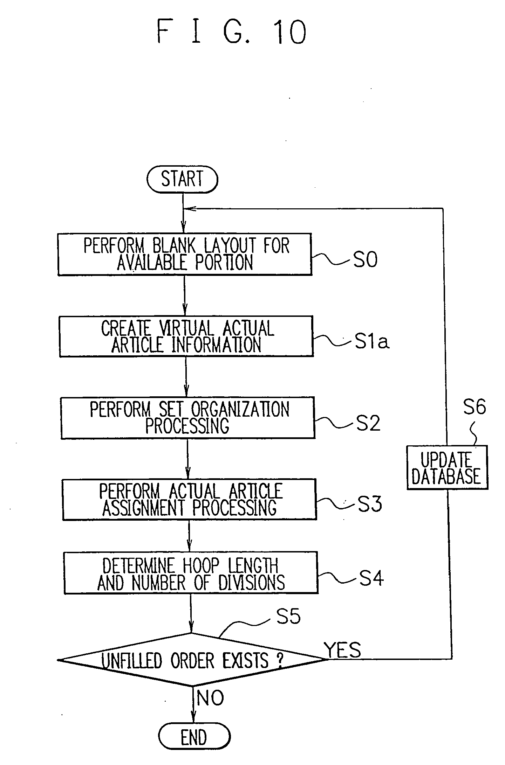

An operation of the information processing apparatus 10 of the second embodiment will be explained mainly in the point differing from the first embodiment. Fig. 10 is a chart showing the operation of the information processing apparatus 10 in the second embodiment. In each processing step shown in Fig. 10, the processing steps given the same reference numerals and symbols are the same processing as the processing in Fig. 3, and therefore the explanation will be made simply.

As shown in Fig. 10, the virtual actual article creating unit 24 of the information processing apparatus 10 performs blank layout processing for the available portions in the actual article based on the flaw information included in the actual article information referring to the actual article information database 22b (step S0). Next, the virtual actual article creating unit 24 creates the virtual actual articles in which the available portions for which the blank layout is performed in step S0 are combined to be a predetermined number of kinds of widths (step S1a). At this time, the virtual actual article information created by the virtual actual article creating unit 24 is stored in the virtual actual article information database 22c.

Next, a set creation processing unit 25 creates a set by organizing a part of or all of a plurality of orders to be optimum for the virtual actual article based on the order information referring to the order information database 22a, and the virtual actual article information referring to the virtual actual article information database 22c (step S2). At this time, the set creation processing unit 25 creates the sets to satisfy the constraints cited as follows.

·The number of sets organized at one time shall be only one set.
·The set length shall be the length of the virtual actual article or shorter so that the actual article does not become insufficient.
·The order of the largest width is prior to the other plurality of orders.
·The hoop length shall be the length which satisfies the outer diameter criterion and the single weight constraint of the order.
·The orders are organized in consideration of the maximum hoop length and the minimum hoop length of each of the orders.

Specifically, when the following equations are satisfied in the order A and the order B, organizing the two orders in one set is forbidden.

Maximum hoop length of the order A < minimum hoop length of the order B
Minimum hoop length of the order A > maximum hoop length of the order B

·The set length shall be larger length than the minimum hoop length of all the orders organized at least in the set.
-The excess area of the set with respect to orders shall be up to a fixed rate of the order area (for example, 20%).
·The set width shall be the width of the available portion of the actual article or less.
·The width shall be the width which satisfies the lowest yield or more.

The set creation processing unit 25 can organize the set which has the hoop length according to each order by satisfying the constraints shown above. The aforementioned constraints are only examples, and the other constraints examples as shown in the first embodiment and the like may be utilized.

Next, an assignment processing unit 26 performs processing of assigning the sets created by the set creation processing unit 25 to the optimum actual articles (step S3). At this time, the assignment processing unit 26 performs assigning processing to satisfy the constraints cited as follows. The following constraints are only examples, and the other constraints examples as shown in the first embodiment and the like may be utilized.

·The set width shall be the width of the available portion of the actual article, or less.
·The total length of the actual articles with assignment shall be the set length, or more.
·The length which can be used from each actual article is the length of the available portion or less.
·The unused portion (remaining length) in the actual article after assignment shall has the minimum value of the actual article with remains, or more.
·The remaining length shall be less than the length of the minimum available portion.
·When one set is assigned to a plurality of actual articles, the number of remaining actual articles shall be one or less.
·The assignment to the actual article is divided to satisfy the constraint concerning the hoop lengths of all the orders included in the set.
·The actual articles with the same widths and the difference in length within 50 m have assignment in the order of earlier date of manufacture.

Next, a hoop length/division determining unit 27 determines the hoop length and the dividing position in the width direction for the actual article in accordance with the set assigned to each actual article (step S4). Next, the order management unit 23 determines whether the set creation processing unit 25 finishes organizing all the orders as the sets or not (step S5). Here, when all the orders are finished being organized as the sets (NO in step S5), the processing of assigning the product coils to the actual articles is finished. When all the orders are not finished being organized as the sets and there remain the unfilled orders (Yes in step S5), a command is given to proceed to step S6, and the information processing apparatus 10 deletes or updates the actual article information (information concerning the available portion when only part of the actual article is used) of the actual article used for assignment in step S3 as ineffective information in the actual article information database 22b (step S6). After step S6, a command is given to return to step S0, and the virtual actual article creating unit 24 refers to the flaw information included in the actual article information from the actual article information database 22b after the update, and performs processing of blank layout of the available portion.

As shown in the above, the information processing apparatus 10 repeats the operations from step S0 to step S6 until the unfilled orders or the actual articles with remains do not exist. As a result, the information processing apparatus 10 can perform the processing of assigning the orders to the actual article in consideration of the flaw of the actual article.

In the aforementioned first and second embodiments, the constitution in which the information processing apparatus 10 includes the order information database 22a and the actual article information database 22b is adopted, but the constitution is not limited to this, and an information processing system having the constitution connected to, for example, a database server managing each database via the network 12 may be adopted. Furthermore, in the information processing system in which a plurality of devices and terminals are connected to the network communicably with each other, a constitution in which at least one device or terminal among the plurality of devices and terminals has the function equivalent to the aforementioned information processing apparatus 10 may be adopted.

Each processing unit of the information processing apparatus 10 in the first and the second embodiments shown in Fig. 1 can be realized by a computer executing a program. The means to supply the program to the computer, for example, a computer readable recording medium recording the above-described program, or a transmission medium for transmitting such a program can be applied as the embodiment of the present invention. A program product such as a computer readable recording medium recording the above-described program can be applied as the embodiment of the present invention. The above-described program, recording medium, transmission medium and program product are included in the category of the present invention.

"The computer readable recording medium" means a portable medium such as a flexible disk, a magneto-optical disk, a ROM and a CD-ROM, and a storage device such as a hard disk contained in a computer system. Further, "the computer readable storage medium" includes what keeps a program for a fixed time, such as a volatile memory (RAM) inside computer systems that are a server and a client when the program is transmitted via the network such as the Internet, and a communication line such as a telephone line.

The above-described program may be transmitted to the other computer systems via a transmission medium or by a transmission wave in the transmission medium from the computer system storing this program in the storage device and the like. Here, "the transmission medium" for transmitting the program means a medium having the function of transmitting information as a network (communication network) such as the Internet and a communication line (line of communication) such as a telephone line.

The above-described program may be for realizing part of the aforementioned function. Further, it may be what can realize the aforementioned function by the combination with the program already recorded in the computer system, a so-called differential file (differential program).

The embodiments of the present invention are described in detail with reference to the drawings thus far, but the concrete constitution is not limited to the embodiments, and designs and the like without departing from the spirit of this invention may be included. In this specification, the explanation is made with the coil blank layout search in the steelmaking industry as the example, but this is not restrictive, and it goes without saying that the present invention is also applicable to the searching technique having the same object in the other fields. For example, it is preferable to apply the invention to the fields such as the other kinds of metallic coils and resin sheets.

Industrial Applicability

According to an information processing apparatus, an information processing system, an information processing method and a recording medium of the same according to the present invention, virtual orders organizing a part of or all of a plurality of orders are created to be optimum for virtual base materials, based on the order information being the information concerning a plurality of orders and the virtual base material information being the information concerning a virtual base material created by combining a plurality of kinds of base materials, and assignment information of assigning the created virtual orders to the optimum base materials is created, therefore making it possible to search an optimum solution of assignment to the base material by combining the orders into the virtual orders, and combining actual articles into the virtual base materials. As a result, the optimum solution of the blank layout for assigning the product coils corresponding to the orders to the base material can be calculated with a smaller amount of calculation.

Further, according to one mode example of the present invention, when flaw information that is the information concerning a flaw of the base material is included in the base material information that is the information concerning a plurality of kinds of base materials, it is further possible to create virtual base material information that is the information concerning a virtual base material combining the portions without including a flaw based on the base material information and the flaw information, and therefore the optimum solution of the blank layout for assigning the product coils corresponding to the orders to the actual articles can be calculated with a smaller amount of calculation in consideration of the information concerning the flaw of the product coils.

**Claims**

1. An information processing apparatus for performing processing of assigning ordered products being products corresponding to a plurality of orders to any of a plurality of kinds of base materials, comprising:

   a virtual order creating unit for creating a virtual order combining a part of or all of the plurality of orders to be optimum for virtual base materials based on order information being information concerning the plurality of orders and virtual base material information being information concerning the virtual base materials created by combining the plurality of kinds of base materials; and
   an assigning unit for creating assignment information of assigning the virtual order created by said virtual order creating unit to the one or more optimum ones among the base materials.

2. The information processing apparatus according to claim 1, wherein said virtual order creating unit creates the virtual orders of a plurality of patterns, and creates the virtual order by determining an optimum pattern by assigning the virtual orders of the plurality of patterns to each of the virtual base materials and evaluating them.

3. The information processing apparatus according to claim 2, wherein said virtual order creating unit evaluates at least width yield of the virtual order with respect to the virtual base materials by assigning the virtual orders of the plurality of patterns to each of the virtual base materials.

4. The information processing apparatus according to claim 1, wherein said assigning unit creates the assignment information by determining an optimum assignment pattern by assigning the virtual order to the base materials with a plurality of assignment patterns and evaluating them.

5. The information processing apparatus according to claim 4, wherein said assigning unit evaluates at least whether the base material is to be used partially or not by assigning the virtual order to the base materials with a plurality of assignment patterns.

6. The information processing apparatus according to claim 1, wherein the base materials are a metal base material in a sheet shape or a band shape having a width and a length, and the assignment information is information determining a width and a length cut out with the ordered products with respect to the base materials.

7. The information processing apparatus according to claim 1, further comprising:

   a virtual base material creating unit for creating virtual base material information being information concerning virtual base materials combining portions including no flaw based on base material information and flaw information, when the flaw information being information concerning a flaw of the base materials is included in the base material information being information concerning the plurality of kinds of base materials.

8. An information processing system with a plurality of devices connected communicably with each other,
   wherein at least one device among the plurality of devices is an information processing apparatus for performing processing of assigning ordered products being products corresponding to a plurality of orders to any of a plurality of kinds of base materials;
   wherein said information processing apparatus comprises:

   a virtual order creating unit for creating a virtual order combining a part of or all of the plurality of orders to be optimum for virtual base materials based on order information being information concerning the plurality of orders and virtual base material information being information concerning' the virtual base materials created by combining the plurality of kinds of base materials; and
   an assigning unit for creating assignment information of assigning the virtual order created by said virtual order creating unit to the one or more optimum ones among the base materials.

9.  An information processing method using an information processing apparatus for performing processing of assigning ordered products being products corresponding to a plurality of orders to any of a plurality of kinds of base materials, comprising:

    a first step of creating a virtual order combing a part of or all of the plurality of orders to be optimum for the virtual base materials based on order information being information concerning the plurality of orders and virtual base material information being information concerning the virtual base materials created by combining the plurality of kinds of base materials; and
    a second step of creating assignment information of assigning the virtual order created in the first step to the one or more optimum ones among the base materials.

10. A computer readable recording medium recording a program for an information processing apparatus for performing processing of assigning ordered products being products corresponding to a plurality of orders to any of a plurality of kinds of base materials, and recording the program to make a computer execute:

    a first step of creating a virtual order combing a part of or all of the plurality of orders to be optimum for the virtual base materials based on order information being information concerning the plurality of orders and virtual base material information being information concerning the virtual base materials created by combining the plurality of kinds of base materials; and
    a second step of creating assignment information of assigning the virtual order created in the first step to the one or more optimum ones among the base materials the optimum base material.

# F I G. 1

EXTERNAL TERMINAL ～11

～12

～10

INFORMATION PROCESSING
APPARATUS

～21

TRANSMISSION
AND RECEPTION
PROCESSING UNIT

～22

～20

CONTROL UNIT

DATABASE ～22a
• ORDER INFORMATION DATABASE
• ACTUAL ARTICLE INFORMATION
  DATABASE ～22b
• VIRTUAL ACTUAL ARTICLE
  INFORMATION DATABASE ～22c

～23

ORDER MANAGEMENT UNIT

～24

VIRTUAL ACTUAL ARTICLE
CREATING UNIT

～25

SET CREATION
PROCESSING UNIT

～26

ASSIGNMENT
PROCESSING UNIT

HOOP LENGTH/DIVISION
DETERMINING UNIT ～27

# F I G. 2A

| ACTUAL ARTICLE WIDTH | ACTUAL ARTICLE TOTAL PROLONGATION | VIRTIAL ACTUAL ARTICLE LENGTH | VIRTIAL ACTUAL ARTICLE |
|---|---|---|---|
| 900 | 10,000 | 49,000 | D . . . |
| 950 | 12,000 | 39,000 | C |
| 1,000 | 14,000 | 27,000 | B |
| 1,050 | 13,000 | 13,000 | A |

C1   D1

B1   A1

# F I G. 2B

VIRTUAL ACTUAL ARTICLE A WIDTH:1,050mm LENGTH:13,000m

a   b   c   d   e

ACTUAL ARTICLE LENGTH    A1

VIRTUAL ACTUAL ARTICLE B WIDTH:1,000mm LENGTH:27,000m

B1

WIDTH 1,000mm PORTION LENGTH 14,000m

A1

# F I G. 3

```
                      ( START )
                          │
        ┌─────────────────┼──────────────────────────┐
        │                 ▼                           │
        │   ┌─────────────────────────────┐          │
        │   │  CREATE VIRTUAL ACTUAL      │  ～ S1    │
        │   │  ARTICLE INFORMATION        │          │
        │   └─────────────────────────────┘          │
        │                 │                           │
        │                 ▼                           │
        │   ┌─────────────────────────────┐          │
        │   │  PERFORM SET ORGANIZATION   │  ～ S2    │
        │   │  PROCESSING                 │          │
        │   └─────────────────────────────┘          │
        │                 │                           │
        │                 ▼                           │
        │   ┌─────────────────────────────┐          │
        │   │  PERFORM ACTUAL ARTICLE     │  ～ S3    │
        │   │  ASSIGNMENT PROCESSING      │          │
        │   └─────────────────────────────┘          │
        │                 │                           │
        │                 ▼                           │
        │   ┌─────────────────────────────┐          │
        │   │  DETERMINE HOOP LENGTH      │  ～ S4    │
        │   │  AND NUMBER OF DIVISIONS    │          │
        │   └─────────────────────────────┘          │
        │                 │           ～ S5           │
        │                 ▼                           │
        │            ◇─────────────────◇    YES       │
        └──── UNFILLED ORDER EXISTS ? ─────────────────┘
                     ◇─────────────────◇
                          │
                          │ NO
                          ▼
                      ( END )
```

# F I G. 4A

| SHEET THICKNESS (mm) | 0.5 |
|---|---|
| SPECIFIC GRAVITY (g/cm$^3$) | 7.5 |
| TRIM MARGIN (mm) | 25 |

# F I G. 4B

| ORDER | ORDER WIDTH (mm) | ORDER WEIGHT (kg) | ORDER AREA (m$^2$) | SINGLE WEIGHT CONSTRAINT (kg) | OUTER DIAMETER CRITERION (m) |
|---|---|---|---|---|---|
| a | 250 | 6,000 | 1,600 | XXX | XX |
| b | 300 | 3,000 | 800 | YYY | YY |
| c | 600 | 3,300 | 880 | ZZZ | ZZ |

# F I G. 4C

| VIRTUAL ACTUAL ARTICLE | VIRTUAL ACTUAL ARTICLE WIDTH (mm) | VIRTUAL ACTUAL ARTICLE LENGTH (m) | VIRTUAL AVAILABLE WIDTH |
|---|---|---|---|
| X | 1,050 | 10,400 | 1,000 |
| Y | 1,150 | 4,800 | 1,100 |

# F I G. 5

SET 1

| ORDER | NUMBER OF LINES | TEMPORARY NUMBER OF DIVISIONS | TEMPORARY NUMBER OF HOOPS | TEMPORARY HOOP LENGTH (m) | OBTAINED AREA (m²) | EXCESS AREA | UNFILLED ORDER AREA |
|---|---|---|---|---|---|---|---|
| a | 4 | 2 | 8 | 800 | 1,600 | 0 | 0 |
| b | 0 | 0 | 0 | 0 | 0 | 0 | 800 |
| c | 0 | 0 | 0 | 0 | 0 | 0 | 880 |

SET 2

| ORDER | NUMBER OF LINES | TEMPORARY NUMBER OF DIVISIONS | TEMPORARY NUMBER OF HOOPS | TEMPORARY HOOP LENGTH (m) | OBTAINED AREA (m²) | EXCESS AREA | UNFILLED ORDER AREA |
|---|---|---|---|---|---|---|---|
| a | 0 | 0 | 0 | 0 | 0 | 0 | 1,600 |
| b | 3 | 1 | 3 | 890 | 801 | 0 | 0 |
| c | 0 | 0 | 0 | 0 | 0 | 0 | 880 |

SET 3

| ORDER | NUMBER OF LINES | TEMPORARY NUMBER OF DIVISIONS | TEMPORARY NUMBER OF HOOPS | TEMPORARY HOOP LENGTH (m) | OBTAINED AREA (m²) | EXCESS AREA | UNFILLED ORDER AREA |
|---|---|---|---|---|---|---|---|
| a | 0 | 0 | 0 | 0 | 0 | 0 | 1,600 |
| b | 1 | 2 | 2 | 734 | 440 | 0 | 360 |
| c | 1 | 2 | 2 | 734 | 881 | 0 | 0 |

SET 4

| ORDER | NUMBER OF LINES | TEMPORARY NUMBER OF DIVISIONS | TEMPORARY NUMBER OF HOOPS | TEMPORARY HOOP LENGTH (m) | OBTAINED AREA (m²) | EXCESS AREA | UNFILLED ORDER AREA |
|---|---|---|---|---|---|---|---|
| a | 2 | 2 | 4 | 734 | 734 | 0 | 866 |
| b | 0 | 0 | 0 | 0 | 0 | 0 | 800 |
| c | 1 | 2 | 2 | 734 | 881 | 0 | 0 |

SET 5

| ORDER | NUMBER OF LINES | TEMPORARY NUMBER OF DIVISIONS | TEMPORARY NUMBER OF HOOPS | TEMPORARY HOOP LENGTH (m) | OBTAINED AREA (m²) | EXCESS AREA | UNFILLED ORDER AREA |
|---|---|---|---|---|---|---|---|
| a | 2 | 2 | 4 | 800 | 800 | 0 | 800 |
| b | 2 | 2 | 4 | 800 | 960 | 160 | 0 |
| c | 0 | 0 | 0 | | 0 | 0 | 880 |

# F I G. 6

SET 1

| 1050 mm WIDE VIRTUAL ACTUAL ARTICLE X | | ~61 |
|---|---|---|
| SET LENGTH | 1,600 | |
| SET WIDTH | 1,000 | |
| AVAILABLE REMAINING WIDTH | 0 | x1000 |
| TOTAL EXCESS AREA | 0 | x100 ~66 |
| TOTAL UNFILLED ORDER AREA | 1,680 | x1 |
| TOTAL EVALUATION VALUE | 1,680 | |

SET 2

| 1050 mm WIDE VIRTUAL ACTUAL ARTICLE X | | ~62 |
|---|---|---|
| SET LENGTH | 890 | |
| SET WIDTH | 900 | |
| AVAILABLE REMAINING WIDTH | 100 | x1000 |
| TOTAL EXCESS AREA | 0 | x100 ~66 |
| TOTAL UNFILLED ORDER AREA | 2,480 | x1 |
| TOTAL EVALUATION VALUE | 102,480 | |

SET 3

| 1050 mm WIDE VIRTUAL ACTUAL ARTICLE X | | ~63 |
|---|---|---|
| SET LENGTH | 1,468 | |
| SET WIDTH | 900 | |
| AVAILABLE REMAINING WIDTH | 100 | x1000 |
| TOTAL EXCESS AREA | 0 | x100 ~66 |
| TOTAL UNFILLED ORDER AREA | 1,960 | x1 |
| TOTAL EVALUATION VALUE | 101,960 | |

SET 4

| 1050 mm WIDE VIRTUAL ACTUAL ARTICLE X | | ~64 |
|---|---|---|
| SET LENGTH | 1,468 | |
| SET WIDTH | 1,100 | |
| AVAILABLE REMAINING WIDTH | (100) | x1000 |
| TOTAL EXCESS AREA | 0 | x100 ~66 |
| TOTAL UNFILLED ORDER AREA | 1,666 | x1 |
| TOTAL EVALUATION VALUE | −98,334 | |

SET 5

| 1050 mm WIDE VIRTUAL ACTUAL ARTICLE X | | ~65 |
|---|---|---|
| SET LENGTH | 1,600 | |
| SET WIDTH | 1,100 | |
| AVAILABLE REMAINING WIDTH | (100) | x1000 |
| TOTAL EXCESS AREA | 160 | x100 ~66 |
| TOTAL UNFILLED ORDER AREA | 1,680 | x1 |
| TOTAL EVALUATION VALUE | −82,320 | |

# F I G. 7

SET 1

| 1150 mm WIDE VIRTUAL ACTUAL ARTICLE Y | | ~71 |
|---|---|---|
| SET LENGTH | 1,600 | |
| SET WIDTH | 1,000 | |
| AVAILABLE REMAINING WIDTH | 100 | ×1000 |
| TOTAL EXCESS AREA | 0 | ×100 ~76 |
| TOTAL UNFILLED ORDER AREA | 1,680 | ×1 |
| TOTAL EVALUATION VALUE | 101,680 | |

SET 2

| 1150 mm WIDE VIRTUAL ACTUAL ARTICLE Y | | ~72 |
|---|---|---|
| SET LENGTH | 890 | |
| SET WIDTH | 900 | |
| AVAILABLE REMAINING WIDTH | 200 | ×1000 |
| TOTAL EXCESS AREA | 0 | ×100 ~76 |
| TOTAL UNFILLED ORDER AREA | 2,480 | ×1 |
| TOTAL EVALUATION VALUE | 202,480 | |

SET 3

| 1150 mm WIDE VIRTUAL ACTUAL ARTICLE Y | | ~73 |
|---|---|---|
| SET LENGTH | 1,468 | |
| SET WIDTH | 900 | |
| AVAILABLE REMAINING WIDTH | 200 | ×1000 |
| TOTAL EXCESS AREA | 0 | ×100 ~76 |
| TOTAL UNFILLED ORDER AREA | 1,960 | ×1 |
| TOTAL EVALUATION VALUE | 201,960 | |

SET 4

| 1150 mm WIDE VIRTUAL ACTUAL ARTICLE Y | | ~74 |
|---|---|---|
| SET LENGTH | 1,468 | |
| SET WIDTH | 1,100 | |
| AVAILABLE REMAINING WIDTH | 0 | ×1000 |
| TOTAL EXCESS AREA | 0 | ×100 ~76 |
| TOTAL UNFILLED ORDER AREA | 1,666 | ×1 |
| TOTAL EVALUATION VALUE | 1,666 | |

SET 5

| 1150 mm WIDE VIRTUAL ACTUAL ARTICLE Y | | ~75 |
|---|---|---|
| SET LENGTH | 1,600 | |
| SET WIDTH | 1,100 | |
| AVAILABLE REMAINING WIDTH | 0 | ×1000 |
| TOTAL EXCESS AREA | 160 | ×100 ~76 |
| TOTAL UNFILLED ORDER AREA | 1,680 | ×1 |
| TOTAL EVALUATION VALUE | 17,680 | |

# F I G. 8

CASE A

| ACTUAL ARTICLE | ACTUAL ARTICLE WIDTH (mm) | ACTUAL ARTICLE LENGTH(m) | ACTUAL ARTICLE USE PATTERN | USE LENGTH | USE AREA (m²) | USED UP |
|---|---|---|---|---|---|---|
| r | 1050 | 2400 | 12 | 2400 | 2520 | 0 |
| s | 1100 | 3200 | 12 | 3200 | 3520 | 0 |
| t | 1150 | 4800 | 12 | 4800 | 5520 | 0 |

CASE B

| ACTUAL ARTICLE | ACTUAL ARTICLE WIDTH (mm) | ACTUAL ARTICLE LENGTH(m) | ACTUAL ARTICLE USE PATTERN | USE LENGTH | USE AREA (m²) | USED UP |
|---|---|---|---|---|---|---|
| r | 1050 | 2400 | 12 | 2400 | 2520 | 0 |
| s | 1100 | 3200 | 9 | 2400 | 2640 | 1 |
| t | 1150 | 4800 | 0 | 0 | 0 | 0 |

CASE C

| ACTUAL ARTICLE | ACTUAL ARTICLE WIDTH (mm) | ACTUAL ARTICLE LENGTH(m) | ACTUAL ARTICLE USE PATTERN | USE LENGTH | USE AREA (m²) | USED UP |
|---|---|---|---|---|---|---|
| r | 1050 | 2400 | 12 | 2400 | 2520 | 0 |
| s | 1100 | 3200 | 0 | 0 | 0 | 0 |
| t | 1150 | 4800 | 6 | 2400 | 2760 | 1 |

CASE D

| ACTUAL ARTICLE | ACTUAL ARTICLE WIDTH (mm) | ACTUAL ARTICLE LENGTH(m) | ACTUAL ARTICLE USE PATTERN | USE LENGTH | USE AREA (m²) | USED UP |
|---|---|---|---|---|---|---|
| r | 1050 | 2400 | 0 | 0 | 0 | 0 |
| s | 1100 | 3200 | 12 | 3200 | 3520 | 0 |
| t | 1150 | 4800 | 4 | 1600 | 1840 | 1 |

CASE E

| ACTUAL ARTICLE | ACTUAL ARTICLE WIDTH (mm) | ACTUAL ARTICLE LENGTH(m) | ACTUAL ARTICLE USE PATTERN | USE LENGTH | USE AREA (m²) | USED UP |
|---|---|---|---|---|---|---|
| r | 1050 | 2400 | 0 | 0 | 0 | 0 |
| s | 1100 | 3200 | 0 | 0 | 0 | 0 |
| t | 1150 | 4800 | 12 | 4800 | 5520 | 0 |

# F I G. 9

CASE A

| TOTAL USE LENGTH | 10400 |
|---|---|
| TOTAL OBTAINED AREA | 11560 |
| NUMBER OF ACTUAL ARTICLES WHICH CANNOT BE USED UP | 0 |
| TOTAL EVALUATION VALUE | 11560 |

~91

≥SET LENGTH~96

x1
x100  ～97

CASE B

| TOTAL USE LENGTH | 4800 |
|---|---|
| TOTAL OBTAINED AREA | 5160 |
| NUMBER OF ACTUAL ARTICLES WHICH CANNOT BE USED UP | 1 |
| TOTAL EVALUATION VALUE | 5260 |

~92

≥SET LENGTH~96

x1
x100  ～97

CASE C

| TOTAL USE LENGTH | 4800 |
|---|---|
| TOTAL OBTAINED AREA | 5280 |
| NUMBER OF ACTUAL ARTICLES WHICH CANNOT BE USED UP | 1 |
| TOTAL EVALUATION VALUE | 5380 |

~93

≥SET LENGTH~96

x1
x100  ～97

CASE D

| TOTAL USE LENGTH | 4800 |
|---|---|
| TOTAL OBTAINED AREA | 5360 |
| NUMBER OF ACTUAL ARTICLES WHICH CANNOT BE USED UP | 1 |
| TOTAL EVALUATION VALUE | 5460 |

~94

≥SET LENGTH~96

x1
x100  ～97

CASE E

| TOTAL USE LENGTH | 4800 |
|---|---|
| TOTAL OBTAINED AREA | 5520 |
| NUMBER OF ACTUAL ARTICLES WHICH CANNOT BE USED UP | 0 |
| TOTAL EVALUATION VALUE | 5520 |

~95

≥SET LENGTH~96

x1
x100  ～97

# F I G. 10

```
                    ( START )
                        │
                        ▼
            ┌──────────────────────────┐
            │ PERFORM BLANK LAYOUT FOR │ ~ S0
            │     AVAILABLE PORTION    │
            └──────────────────────────┘
                        │
                        ▼
            ┌──────────────────────────┐
            │   CREATE VIRTUAL ACTUAL  │ ~ S1a
            │    ARTICLE INFORMATION   │
            └──────────────────────────┘
                        │
                        ▼
            ┌──────────────────────────┐
            │ PERFORM SET ORGANIZATION │ ~ S2       S6
            │        PROCESSING        │          ┌────────┐
            └──────────────────────────┘          │ UPDATE │
                        │                         │DATABASE│
                        ▼                         └────────┘
            ┌──────────────────────────┐
            │   PERFORM ACTUAL ARTICLE │ ~ S3
            │   ASSIGNMENT PROCESSING  │
            └──────────────────────────┘
                        │
                        ▼
            ┌──────────────────────────┐
            │   DETERMINE HOOP LENGTH  │ ~ S4
            │  AND NUMBER OF DIVISIONS │
            └──────────────────────────┘
                        │
                        ▼       ~ S5
                   ◇─────────────◇  YES
                  UNFILLED ORDER EXISTS ?  ───────►
                   ◇─────────────◇
                        │ NO
                        ▼
                    ( END )
```

# F I G. 11

ORDER

SET

ACTUAL ARTICLE
(PARENT COIL)

a

b

c

A
bA
aA
aA
cA

B
cB
cB
cB

C
bC
bC
aC
aC

X

Y

Z

EP 1 615 092 A1

<div align="center"><b>INTERNATIONAL SEARCH REPORT</b></div>

| International application No. |
| --- |
| PCT/JP2004/005049 |

**A. CLASSIFICATION OF SUBJECT MATTER**
　　Int.Cl⁷　G05B19/418

According to International Patent Classification (IPC) or to both national classification and IPC

**B. FIELDS SEARCHED**

Minimum documentation searched (classification system followed by classification symbols)
　　Int.Cl⁷　G05B19/418, G06F17/60, B23Q41/08

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 10-156621 A (Toray Industries, Inc.), 16 June, 1998 (16.06.98), Par. No. [0022]; Fig. 2 (Family: none) | 1–10 |
| X | JP 11-245142 A (Sumitomo Metal Industries, Ltd.), 14 September, 1999 (14.09.99), Par. No. [0028]; Fig. 2 (Family: none) | 1–10 |
| X | JP 6-149850 A (Nippon Steel Corp.), 31 May, 1994 (31.05.94), Par. Nos. [0027], [0034]; Fig. 4 (Family: none) | 1–10 |

☒ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 June, 2004 (30.06.04) | 20 July, 2004 (20.07.04) |

| Name and mailing address of the ISA/ | Authorized officer |
| --- | --- |
| 　　Japanese Patent Office | |
| Facsimile No. | Telephone No. |

Form PCT/ISA/210 (second sheet) (January 2004)

**INTERNATIONAL SEARCH REPORT**

International application No.

PCT/JP2004/005049

C (Continuation). DOCUMENTS CONSIDERED TO BE RELEVANT

| Category* | Citation of document, with indication, where appropriate, of the relevant passages | Relevant to claim No. |
|---|---|---|
| X | JP 6-142724 A (Kobe Steel, Ltd.), 24 May, 1994 (24.05.94), Par. Nos. [0007], [0009]; Fig. 1 (Family: none) | 1-10 |
| A | JP 2002-269161 A (NKK Corp.), 20 September, 2002 (20.09.02), Par. No. [0030]; Fig. 2 (Family: none) | 7 |

Form PCT/ISA/210 (continuation of second sheet) (January 2004)